# EUROPEAN PATENT APPLICATION

(11) **EP 4 704 225 A1**
(43) Date of publication of application: **04.03.2026**
(21) Application number: 24795428.2
(22) Date of filing: 03.01.2024
(51) Int. Cl.: H01M 50/103

(54) **BATTERY AND BATTERY PACK THEREOF**

(30) Priority: 28.04.2023 CN 202321032322 U
(71) Applicant: Sunwoda Mobility Energy Technology Co., Ltd., Shenzhen, Guangdong 518107 (CN)
(72) Inventor: YUAN, Cheng, Shenzhen, Guangdong 518107 (CN); YANG, Wei, Shenzhen, Guangdong 518107 (CN); LIN, Yongxiang, Shenzhen, Guangdong 518107 (CN); CHEN, Hui, Shenzhen, Guangdong 518107 (CN)
(74) Representative: Meyer, Thorsten
(86) International application number: PCT/CN2024/070437
(87) International publication number: WO 2024/222038

(57) **Abstract**

The present disclosure relates to the technical field, and discloses a battery comprising a housing, a cover, and a battery cell, wherein the housing defines an accommodating cavity, and one end of the housing is provided with an opening communicated with the accommodating cavity; the opening is circular in shape, and the housing is in a shape of a regular polygonal prism; the cover covers the opening and is connected to the housing; the battery cell is provided in the accommodating cavity and the accommodating cavity is a cylindrical cavity. Based on the above structure, since the housing is in the shape of a regular polygonal prism, it is beneficial for alignment and assembly, and there is no need for additional fixing brackets. Further, when adjacent batteries are combined, there is no gap therebetween, thereby achieving high space utilization and more secure fixation. More importantly, compared with square or regular polygonal prism-shaped cavities, the cylindrical accommodating cavity of the battery can be uniformly stressed, especially when the bare battery cell within the accommodating cavity expands. Thus, an enhanced compatibility is achieved between the cylindrical accommodating cavity and the cylindrical battery cell, thereby improving structural safety and reliability and enhancing the structural strength of the battery cell.

## Description

### CROSS REFERENCE TO RELATED APPLICATIONS

The present disclosure claims the benefit of Chinese Patent Application No. 202321032322.5, filed on April 28, 2023, the entire contents of which are incorporated herein by reference.

### TECHNICAL FIELD

The present disclosure relates to the technical field, and more particularly to a battery and a battery pack including the same.

### BACKGROUND

Batteries on the market are primarily categorized into three types based on their shapes: cylindrical batteries, prismatic batteries, and pouch batteries. Cylindrical batteries are widely used due to their low cost and high processing efficiency.

Existing cylindrical batteries are difficult to be secured due to their outer contours. Generally, a fixing bracket is required to fix these cylindrical batteries, thereby preventing them from slipping or loosening. However, on the one hand, the fixing bracket occupies accommodating space, resulting in waste of space, and fixing only at the bottom or at a specific location of the cylindrical battery easily leads to insecure fixation; on the other hand, when the cylindrical batteries are combined, there is still a gap between two adjacent cylindrical batteries, resulting in low space utilization.

### SUMMARY OF THE DISCLOSURE

One objective of the present disclosure is to provide a battery.

To achieve the above objective, the present disclosure provides a battery, comprising:
a housing, defining an accommodating cavity, wherein one end of the housing is provided with an opening communicated with the accommodating cavity, the opening is circular in shape, and the housing is in a shape of a regular polygonal prism;
a cover, covering the opening and connected to the housing;
a battery cell, disposed in the accommodating cavity;
wherein the accommodating cavity is a cylindrical cavity.

In some examples of the present disclosure, the housing is in the shape of a regular hexagonal prism.

In some examples of the present disclosure, an outer contour of the cover is circular;
the housing comprises an inner wall surface, an outer wall surface, and an end surface, wherein the inner wall surface defines the accommodating cavity and the opening, the inner wall surface and the outer wall surface are opposite to each other, and the end surface is connected to the inner wall surface and the outer wall surface at the opening respectively, a limit recess is provided at a junction of the inner wall surface and the end surface, and the cover is arranged in the limit recess.

In some examples of the present disclosure, the outer contour of the cover is a regular polygon, and an outer edge of the cover is aligned with an outer edge of the housing.

In some examples of the present disclosure, the housing comprises an inner wall surface, an outer wall surface and an end surface, wherein the inner wall surface defines the accommodating cavity and the opening, the inner wall surface and the outer wall surface are opposite to each other, the end surface is connected to the inner wall surface and the outer wall surface at the opening respectively, and a limit recess is provided at a junction of the outer wall surface and the end surface;
the cover comprises a main body and a first positioning protrusion which is located on a side of the main body facing the opening at an edge of the main body, the first positioning protrusion is arranged in the limit recess, and the main body covers the opening.

In some examples of the present disclosure, a minimum distance between the inner wall surface and the outer wall surface is defined as *"a",* a width of the limit recess is defined as *"b",* and a - b ≥ 0.2 mm.

In some examples of the present disclosure, the cover comprises a main body and a second positioning protrusion which is located on a side of the main body facing the opening;
the housing comprises an inner wall surface, an outer wall surface, and an end surface, wherein the inner wall surface defines the accommodating cavity and the opening, the inner wall surface and the outer wall surface are opposite to each other, and the end surface is connected to the inner wall surface and the outer wall surface at the opening respectively;
wherein the main body is connected to the end surface, and the second positioning protrusion is inserted into the opening and fits with the inner wall surface.

In some examples of the present disclosure, a first welding portion is provided on a side of the main body facing away from the end surface, a projection of the first welding portion along an axis of the opening falls within the end surface, and the cover is welded to the housing via the first welding portion.

In some examples of the present disclosure, an end of the housing facing away from the opening is formed with a second welding portion protruding toward the opening, the housing is welded to the battery cell via the second welding portion, and the end of the housing facing away from the opening is provided with an explosion-proof notch.

Another objective of the present disclosure is to provide a battery pack comprising the aforementioned battery.

Compared with the prior art, the battery provided in the present disclosure has the following advantages.

The battery provided in the present disclosure comprises a housing, a cover and a battery cell, wherein the housing defines an accommodating cavity, and one end of the housing is provided with an opening communicated with the accommodating cavity; the opening is circular in shape, and the housing is in a shape of a regular polygonal prism; the cover covers the opening and is connected to the housing; the battery cell is disposed within the accommodating cavity, and the accommodating cavity is a cylindrical cavity. Based on the above structure, since the housing is in the shape of a regular polygonal prism, it is beneficial for alignment and assembly, and there is no need for additional fixing brackets. Further, when adjacent batteries are combined, there is no gap therebetween, thereby achieving high space utilization and more secure fixation. More importantly, compared with square or regular polygonal prism-shaped cavities, the cylindrical accommodating cavity of the battery in the present disclosure can be uniformly stressed, especially when the bare battery cell within the accommodating cavity expands. Thus, an enhanced compatibility is achieved between the cylindrical accommodating cavity and the cylindrical battery cell, thereby improving structural safety and reliability and enhancing the structural strength of the battery cell.

### BRIEF DESCRIPTION OF THE DRAWINGS

Figure 1 is a schematic diagram showing an overall structure of a battery according to an example of the present disclosure;
Figure 2 is a structural schematic diagram of a housing according to the example of the present disclosure;
Figure 3 is a bottom view of the housing according to the example of the present disclosure;
Figure 4 is a sectional view of the battery according to the example of the present disclosure, taken along line A-A in Figure 1;
Figure 5 is an enlarged view of Part A in Figure 4;
Figure 6 is an enlarged view of Part B in Figure 4;
Figure 7 is a sectional view of a battery according to another example of the present disclosure;
Figure 8 is an enlarged view of Part C in Figure 7;
Figure 9 is a schematic diagram showing an overall structure of a battery according to yet another example of the present disclosure;
Figure 10 is a sectional view of the battery according to yet another example of the present disclosure, taken along line B-B in Figure 9;
Figure 11 is an enlarged view of Part D in Figure 10.

List of reference signs: 100. battery; 1. housing; 11. accommodating cavity; 12. opening; 13. limit recess; 15. second welding portion; 16. explosion-proof notch; 171. inner wall surface; 172. outer wall surface; 173. end surface; 2. cover; 20. main body; 21. first positioning protrusion; 22. second positioning protrusion; 23. first welding portion; 24. terminal post; 3. battery cell.

### DETAILED DESCRIPTION

Technical solutions of examples in the present disclosure are clearly and completely described below in conjunction with the accompanying drawings. Obviously, the described examples are only some of the examples of the present disclosure, not all of them. Based on the examples of the present disclosure, all other examples obtained by those skilled in the art without creative effort shall be fallen within the scope of protection of the present disclosure.

It should be understood that in the description of the present disclosure, terms indicating orientations or positional relationships, such as, "center", "upper", "lower", "front", "rear", "left", "right", "vertical", "horizontal", "top", "bottom", "inner" and "outer", etc., are based on the orientations or positional relationships shown in the accompanying drawings. They are solely intended to facilitate and simplify the description of the present disclosure, rather than to indicate or imply that a device or a component referred to must have a specific orientation, or be constructed or operate in a specific orientation. Therefore, these terms should not be construed as a limitation of the present disclosure. Terms "first" and "second" are used for descriptive purposes only, and should not be construed to indicate or imply relative importance or to implicitly specify the number of the technical features indicated. That is, a technical feature defined by the terms "first" and "second" may explicitly or implicitly include one or more of the features. Furthermore, unless otherwise specified, "a plurality of" means two or more.

It should be noted that, in the description of the present disclosure, unless otherwise specified or limited, terms "mounted", "communicated" and "connected" should be interpreted broadly. For example, these terms may mean fixed, removable, or integral connections; alternatively, they may mean mechanical or electrical connections; alternatively, they may mean direct connections or indirect connections through an intermediary; alternatively, they may mean internal communication between two components. Those skilled in the art will understand the specific meanings of these terms in the present disclosure based on the specific circumstances.

### Example 1

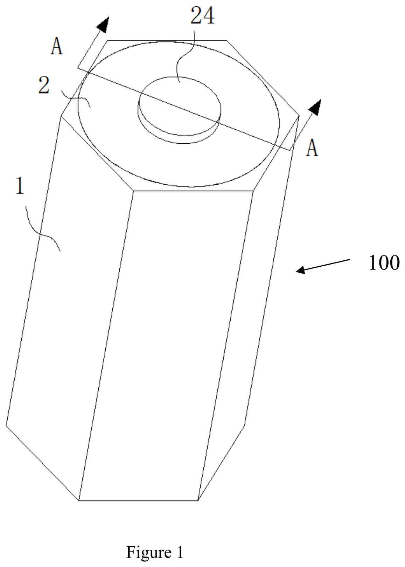

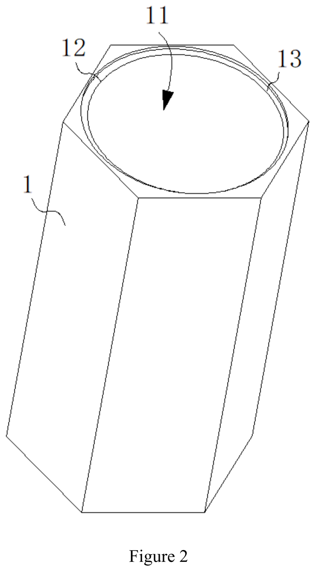

As shown in Figures 1 to 4, in this example of the present disclosure, provided is a battery 100, comprising a housing 1, a cover 2, and a battery cell 3. The housing 1 defines an accommodating cavity 11, and one end of the housing 1 is provided with an opening 12 communicated with the accommodating cavity 11. The opening 12 is circular in shape and the housing 1 is in a shape of a regular polygonal prism. The cover 2 covers the opening 12 and is connected to the housing 1. The battery cell 3 is disposed in the accommodating cavity 11, and the accommodating cavity 11 is cylindrical. Further, a terminal post 24 is also provided on the cover 2. One end of the terminal post 24 is electrically connected to the battery cell 3, and the other end of the terminal post 24 is exposed on the cover 2 for current output. A plurality of batteries 100 is connected in series or in parallel via their respective terminal posts 24 to form a battery module or a battery pack.

Based on the above structure, since the housing 1 is in the shape of a regular polygonal prism, it is beneficial for alignment and assembly, and there is no need for additional fixing brackets. Further, when adjacent batteries 100 are combined, there is no gap therebetween, thereby achieving high space utilization and more secure fixation. More importantly, compared with square or regular polygonal prism-shaped cavities, the cylindrical accommodating cavity 11 of the battery 100 in the present disclosure can be uniformly stressed, especially when the bare battery cell 3 within the accommodating cavity 11 expands. Thus, an enhanced compatibility is achieved between the cylindrical accommodating cavity 11 and the cylindrical battery cell 3, thereby improving structural safety and reliability and enhancing the structural strength of the battery cell 3.

Optionally, as shown in Figure 1, in this example, the housing 1 is in the shape of a regular hexagonal prism. Without doubt, the housing 1 also may be in the shape of other regular polygonal prisms, such as a regular pentagonal prism or a regular triangular prism. Thus, by taking advantage of the property of the polygonal prism shape, i.e., being convenient for alignment and assembly, when a plurality of batteries 100 are placed together to be assembled into a battery pack, the outer wall surfaces of adjacent batteries 100 are easily aligned, so that these batteries 100 are easily assembled into the battery pack with a high assembly efficiency, high space utilization, and an enhanced structural strength of the battery cells.

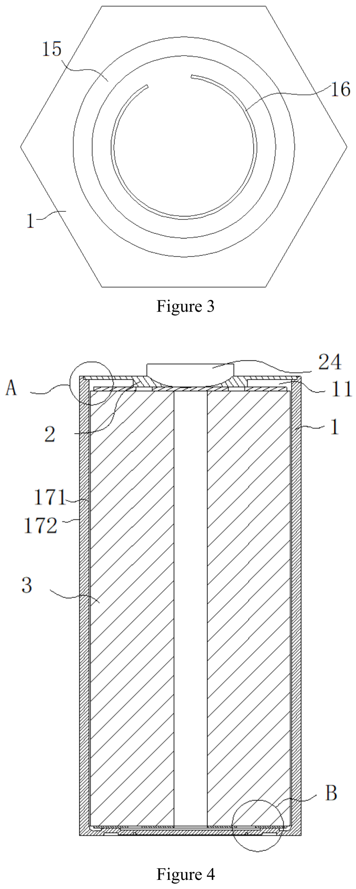

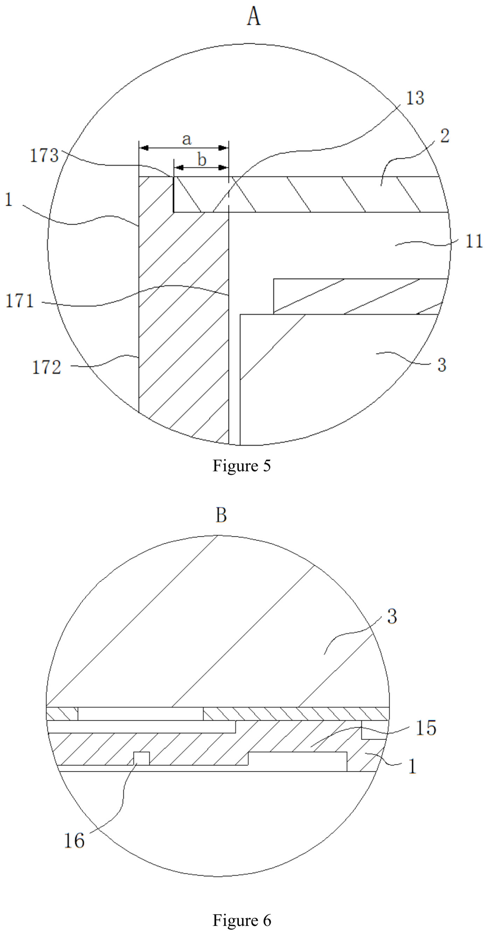

Optionally, as shown in Figures 4 and 5, in this example, an outer contour of the cover 2 is circular. The housing 1 comprises an inner wall surface 171, an outer wall surface 172, and an end surface 173. The inner wall surface 171 defines the accommodating cavity 11 and the opening 12. The inner wall surface 171 and the outer wall surface 172 are opposite to each other, and the end surface 173 is connected to the inner wall surface 171 and outer wall surface 172 at the opening 12, respectively. A limit recess 13 is provided at a junction of the inner wall surface 171 and the end surface 173, and the cover 2 is arranged in the limit recess 13. During welding, welding is performed on a recess surface of the limit recess 13 and an outer peripheral surface of the cover 2. Based on this, the alignment of the cover 2 with the limit recess 13 facilitates the positioning and installation of the cover 2, thereby improving processing and assembly efficiency.

After the limit recess 13 is formed, the wall thickness of the housing 1 at the limit recess 13 will be reduced, which easily leads to deformation and fracture during welding. Considering this, optionally, as shown in Figure 5, in this example, a minimum distance between the inner wall surface 171 and the outer wall surface 172 is measured as "*a*" using a wall thickness gauge or a wall thickness micrometer, a width of the limit recess 13 is measured as "b" using a scaleplate, and a-b ≥ 0.2 mm. This ensures that no deformation or fracture occurs at the weld joint when the cover 2 and the housing 1 are welded together.

Optionally, as shown in Figures 3 and 6, in this example, an end of the housing 1 facing away from the opening 12 is provided with a second welding portion 15 protruding toward the opening 12, and the second welding portion 15 is specifically groove-shaped. The housing 1 is welded to the battery cell 3 via the second welding portion 15. The end of the housing 1 facing away from the opening 12 is also provided with an explosion-proof notch 16, which is located within the second welding portion 15. Thus, during welding, the second welding portion 15 is welded to securely connect the housing 1 to the battery cell 3, thereby facilitating alignment for welding. Besides, when a pressure inside the battery cell is excessive, the explosion-proof notch 16 automatically opens to release pressure. Further, since the explosion-proof notch 16 is located within the second welding portion 15, it is beneficial to ensure that the explosion-proof notch 16 will open smoothly to release pressure and that the battery cell is prevented from loosening when the explosion-proof notch 16 opens.

In summary, in the present example, provided is a battery 100, primarily comprising a housing 1, a cover 2, and a battery cell 3. The housing 1 defines an accommodating cavity 11, and one end of the housing 1 is provided with an opening 12 communicated with the accommodating cavity 11. The opening 12 is circular in shape and the housing 1 is in a shape of a regular polygonal prism. The cover 2 covers the opening 12 and is connected to the housing 1. The battery cell 3 is disposed in the accommodating cavity 11, and the accommodating cavity 11 is cylindrical. Compared with the prior art, this battery 100 has the following advantages.
1. Since the housing 1 is in a shape of a regular polygonal prism, it is beneficial for alignment and assembly, and there is no need for additional fixing brackets; besides, when adjacent batteries 100 are combined, there is no gap therebetween, thereby achieving high space utilization and more secure fixation.
2. Compared with square or regular polygonal prism-shaped cavities, the cylindrical accommodating cavity 11 of the battery 100 in the present disclosure can be uniformly stressed, especially when the bare battery cell 3 within the accommodating cavity 11 expands. Thus, an enhanced compatibility is achieved between the cylindrical accommodating cavity 11 and the cylindrical battery cell 3, thereby improving structural safety and reliability and enhancing the structural strength of the battery cell 3.
3. By aligning the cover 2 with the limit recess 13, positioning and installation of the cover 2 are facilitated, thereby achieving high processing and assembly efficiency.
4. By designing the wall thickness of the housing 1 at the limit recess 13, it can be ensured that no deformation or fracture occurs at the weld joint when the cover 2 and the housing 1 are welded together.

In this example, a battery pack is also provided. The battery pack comprises the aforementioned batteries 100, and adjacent batteries 100 are abutted and assembled via the outer wall surfaces 172 of their housings 1. Due to the use of the aforementioned batteries 100, the battery pack achieves high space utilization and a relatively stable structure.

### Example 2

Optionally, this example differs from Example 1 in that the outer contour of the cover 2 is a regular polygon, and an outer edge of the cover 2 is aligned with an outer edge of the housing 1. This facilitates alignment of the cover 2 with the housing 1. Furthermore, after the cover 2 and housing 1 are securely connected, an enhanced aesthetic effect is achieved, and no gap remains on a top surface of the battery 100.

### Example 3

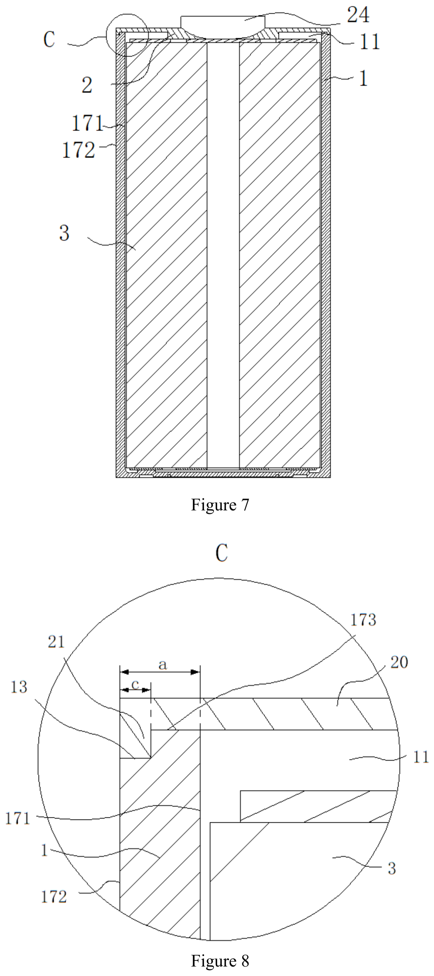

Optionally, as shown in Figures 7 and 8, the differences between this example and Example 1 are as follows: the housing 1 comprises an inner wall surface 171, an outer wall surface 172, and an end surface 173; wherein the inner wall surface 171 defines an accommodating cavity 11 and an opening 12, and the inner wall surface 171 and the outer wall surface 172 are opposite to each other; the end surface 173 is connected to the inner wall surface 171 and the outer wall surface 172 at the opening 12 respectively; a limit recess 13 is provided at a junction of the outer wall surface 172 and the end surface 173;

the cover 2 comprises a main body 20 and a first positioning protrusion 21 which is located on a side of the main body 20 facing the opening at an edge of the main body 20; the first positioning protrusion 21 is arranged in the limit recess 13 and the main body 20 covers the opening 12. Thus, the cover 2 can be quickly positioned and installed by fitting the first positioning protrusion 21 with the limit recess 13.

After the limit recess 13 is formed, the wall thickness of the housing 1 at the limit recess 13 will be reduced, which easily leads to deformation and fracture during welding. Considering this, optionally, as shown in Figure 8, in this example, a minimum distance between the inner wall surface 171 and the outer wall surface 172 is measured as "*a*" using a wall thickness gauge or a wall thickness micrometer, a width of the limit recess 13 is measured as "c" using a scaleplate or a caliper, and a-c ≥ 0.2 mm. This ensures that no deformation or fracture occurs at the weld joint when the cover 2 and the housing 1 are welded together.

### Example 4

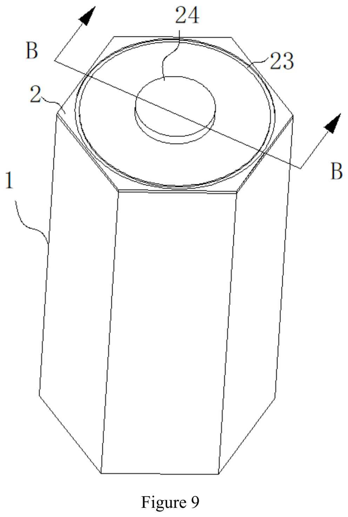

Optionally, as shown in Figures 9 to 11, the differences between this example and Example 1 are as follows: the cover 2 comprises a main body 20 and a second positioning protrusion 22 which is located on a side of the main body 20 facing the opening 12; the housing 1 comprises an inner wall surface 171, an outer wall surface 172, and an end surface 173; the inner wall surface 171 defines an accommodating cavity 11 and the opening 12; the inner wall surface 171 and the outer wall surface 172 are opposite to each other, and the end surface 173 is connected to the inner wall surface 171 and the outer wall surface 172 at the opening 12, respectively; wherein the main body 20 is connected to the end surface 173, and the second positioning protrusion 22 is inserted into the opening 12 and fits with the inner wall surface 171. The "fit" mentioned here can be a clearance fit, an interference fit, or a transition fit, but other types of fits are also contemplated. Based on this, the cover 2 can be quickly positioned and installed by fitting the second positioning protrusion 22 with the inner wall surface 171.

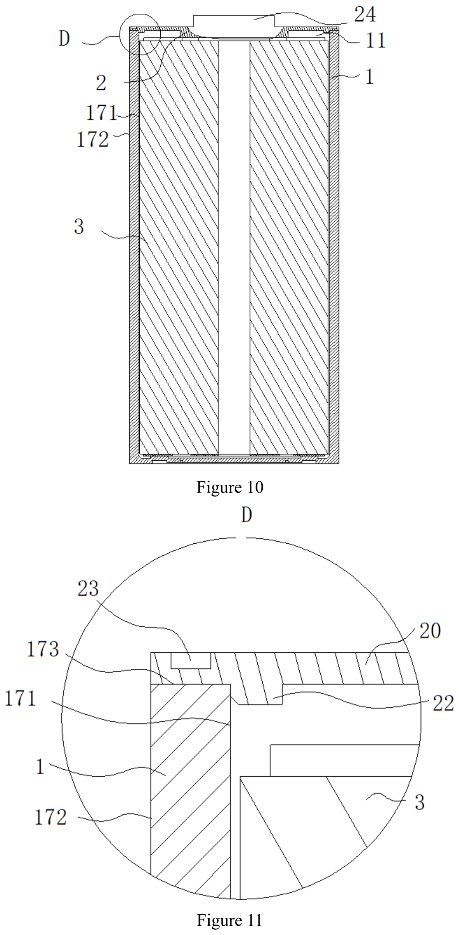

Optionally, as shown in Figure 11, in this example, a first welding portion 23 is provided on a side of the main body 20 facing away from the end surface 173; specifically, the first welding portion 23 is groove-shaped; a projection of the first welding portion 23 along an axis of the opening 12 falls within the end surface 173; and the cover 2 is welded to the housing 1 via the first welding portion 23. Based on this, during welding, by welding the cover 2 to the end surface 173 through the first welding portion 23, the cover 2 and the housing 1 can achieve a better welding effect, and therefore they are less likely to loosen.

The descriptions above are merely preferred examples of the present disclosure. It should be noted that those skilled in the art may make various modifications and substitutions, without departing from the technical principles of the present disclosure, and such modifications and substitutions should be considered within the scope of protection of the present disclosure.

## Claims

1. A battery, comprising:
a housing (1), defining an accommodating cavity (11), wherein one end of the housing (1) is provided with an opening (12) communicated with the accommodating cavity (11), the opening (12) is circular in shape, and the housing (1) is in a shape of a regular polygonal prism;
a cover (2), covering the opening (12) and connected to the housing (1); and
a battery cell (3), disposed in the accommodating cavity (11);
wherein the accommodating cavity (11) is a cylindrical cavity.

2. The battery according to claim 1, wherein the housing (1) is in the shape of a regular hexagonal prism.

3. The battery according to claim 1, wherein an outer contour of the cover (2) is circular;
the housing (1) comprises an inner wall surface (171), an outer wall surface (172) and an end surface (173), the inner wall surface (171) defines the accommodating cavity (11) and the opening (12), the inner wall surface (171) and the outer wall surface (172) are opposite to each other, the end surface (173) is connected to the inner wall surface (171) and the outer wall surface (172) at the opening (12) respectively, a limit recess (13) is provided at a junction between the inner wall surface (171) and the end surface (173), and the cover (2) is arranged in the limit recess (13).

4. The battery according to claim 1, wherein an outer contour of the cover (2) is a regular polygon and an outer edge of the cover (2) is aligned with an outer edge of the housing (1).

5. The battery according to claim 4, wherein the housing (1) comprises an inner wall surface (171), an outer wall surface (172) and an end surface (173), the inner wall surface (171) defines the accommodating cavity (11) and the opening (12), the inner wall surface (171) and the outer wall surface (172) are opposite to each other, the end surface (173) is connected to the inner wall surface (171) and the outer wall surface (172) at the opening (12) respectively, and a limit recess (13) is provided at a junction of the outer wall surface (172) and the end surface (173);
the cover (2) comprises a main body (20) and a first positioning protrusion (21), the first positioning protrusion (21) is located on a side of the main body (20) facing the opening (12) at an edge of the main body (20), the first positioning protrusion (21) is arranged in the limit recess (13), and the main body (20) covers the opening (12).

6. The battery according to claim 3 or claim 5, wherein in a same direction perpendicular to the outer wall surface (172), a minimum distance between the inner wall surface (171) and the outer wall surface (172) is defined as *"a",* a width of the limit recess (13) is defined as *"b",* and a-b ≥0.2 mm.

7. The battery according to claim 4, wherein the cover (2) comprises a main body (20) and a second positioning protrusion (22), the second positioning protrusion (22) is provided on a side of the main body (20) facing the opening (12);
the housing (1) comprises an inner wall surface (171), an outer wall surface (172) and an end surface (173), the inner wall surface (171) defines the accommodating cavity (11) and the opening (12), the inner wall surface (171) and the outer wall surface (172) are opposite to each other, and the end surface (173) is connected to the inner wall surface (171) and the outer wall surface (172) at the opening (12), respectively;
wherein the main body (20) is connected to the end surface (173), and the second positioning protrusion (22) is inserted into the opening (12) and fits with the inner wall surface (171).

8. The battery according to claim 7, wherein a first welding portion (23) is provided on a side of the main body (20) facing away from the end surface (173), a projection of the first welding portion (23) along an axis of the opening (12) falls within the end surface (173), and the cover (2) is welded to the housing (1) via the first welding portion (23).

9. The battery according to claim 1, wherein an end of the housing (1) facing away from the opening (12) is provided with a second welding portion (15) protruding toward the opening (12), the housing (1) is welded to the battery cell (3) via the second welding portion (15), and the end of the housing (1) facing away from the opening (12) is provided with an explosion-proof notch (16).

10. A battery pack, comprising the battery according to any one of claims 1 to 9.
